# EUROPEAN PATENT APPLICATION

(11) **EP 4 349 515 A1**
(43) Date of publication of application: **10.04.2024**
(21) Application number: 21957586.7
(22) Date of filing: 20.09.2021
(51) Int. Cl.: B23C 5/10

(54) **END MILL**

(71) Applicant: OSG Corporation, Toyokawa-City, Aichi 442-0005 (JP)
(72) Inventor: KAWAGUCHI, Oji, Toyokawa-City, Aichi 441-1231 (JP)
(74) Representative: Prüfer & Partner mbB Patentanwälte · Rechtsanwälte
(86) International application number: PCT/JP2021/034444
(87) International publication number: WO 2023/042405

(57) **Abstract**

An end mill that facilitates discharge of chips and enables twining of chips to be suppressed is provided. An end mill (10) includes: a tool body with a columnar shape (11) rotated with a axis line (O) thereof taken as a rotation axis; a helical flute (12) recessed in a rim of the tool body in such a manner that the helical flute is twisted around the axis line; an end cutting edge (16a to 16c) formed at a tip part of the tool body; a flank (17a to 17c) circumferentially extended from the end cutting edge; and a gash (18a to 18c) that is recessed on the tip side of the helical flute from a outer circumferential side toward the axis line and forms a cutting face (19a to 19c) of the end cutting edge. The cutting face is formed as a recessed curved surface and the end cutting edge comprised of a ridge between the cutting face and the flank is concavely curved.

## Description

### TECHNICAL FIELD

The present invention relates to an end mill that especially facilitates discharge of chips and allows twining of chips to be suppressed.

### BACKGROUND ART

An end mill, a kind of cutting tool, includes a tool body with a columnar shape, a helical flute recessed in a rim of the tool body, and an end cutting edge formed in a tip part of the tool body. Such an end mill in which a cutting face of an end cutting edge is formed by a gash recessed on the tip side of a helical flute is conventionally known. According to Patent Literature 1, for example, a cutting face arising from this gash is formed by a flat surface and an end cutting edge comprised of a ridge between the cutting face and a flank is linearly formed.

### Prior Art Document

### Patent Literature

[Patent Literature 1] Japanese Unexamined Patent Application Literature No. 2017-226048

### DISCLOSURE OF THE INVENTION

### PROBLEM TO BE SOLVED BY THE INVENTION

However, when an end cutting edge is linear as in Patent Document 1, a problem arises. Chips produced by the end cutting edge are prone to be retained in a gash and chips are difficult to discharge to outside the end mill. In addition, chips produced at a linear end cutting edge are relatively thick and less prone to be separated; therefore, the chips are prone to twine around the end mill.

The present invention has been made to solve the above-mentioned problem and it is an object of the present invention to provide an end mill in which chips can be easily discharged and twining of chips can be suppressed.

### MEANS OF SOLVING THE PROBLEM

To achieve the object, an end mill according to the present invention includes: a tool body with a columnar shape rotated with an axis line thereof taken as a rotation axis; a helical flute recessed in a rim of the tool body in such a manner that the helical flute is twisted around the axis line; an end cutting edge formed in a tip part of the tool body; a flank circumferentially extending from the end cutting edge; and a gash recessed on the tip side of the helical flute from an outer circumferential side toward the axis line and forming a cutting face of the end cutting edge. The cutting face is formed as a concavely curved surface and the end cutting edge comprised of a ridge between the cutting face and the flank is concavely curved.

### EFFECT OF THE INVENTION

In an end mill according to Claim 1, an end cutting edge is concavely curved by a gash having a recessed curved surface. Therefore, during cutting with the end cutting edge, chips can be spirally produced so as to guide the chips toward the center side of the curved surface and retention of the chips in the gash can be suppressed. As a result, chips can be easily discharged from the vicinity of the gash to outside the end mill. As compared with cases where a linear end cutting edge is used, when a recessed end cutting edge is used, an identical amount can be cut with a longer end cutting edge; therefore, chips produced by the end cutting edge can be easily thinned. As a result, chips can be easily separated and thus, twining of chips around the end mill can be suppressed.

With an end mill according to Claim 2, the following effect is brought about in addition to the effect brought about by the end mill according to Claim 1: a recessed amount that is the shortest distance from a tangential line at a most circumferentially recessed point in an end cutting edge to the outermost end of the end cutting edge as viewed in the direction of the axis line is taken as m and the diameter of the tool body is taken as D. The rigidity of the end mill can be ensured to suppress breakage of the end mill by satisfying m≤0.05D.

With an end mill according to Claim 3, the following effect is brought about in addition to the effect brought about by the end mill according to Claim 1 or 2: A recessed amount that is the shortest distance from a tangential line at a most circumferentially recessed point in an end cutting edge to the outermost end of the end cutting edge as viewed in the direction of the axis line is taken as m and an angle formed by a virtual plane perpendicular to the axis line and a flank is taken as β. The flatness of a cutting surface arising from the end cutting edge can be easily controlled to less than 0.15 mm by satisfying m<0.15/tanβ. When the flatness of this cutting surface is less than 0.15 mm, for example, the flatness can be finished to 0.02 to 0.05 mm at a time during subsequent finishing with the cutting surface and a number of times of finishing can be reduced.

With an end mill according to Claim 4, the following effect is brought about in addition to the effect brought about by the end mill according to any of Claims 1 to 3: An end cutting edge includes a center cutting edge facing the axis line. This center cutting edge enables cutting in the axis line direction with the end mill. Cutting in the axis line direction is prone to pose a problem of discharge or twining of chips. As mentioned above, a recessed end cutting edge facilitates discharge of chips and allows twining of chips around the end mill to be suppressed.

With an end mill according to Claim 5, the following effect is brought about in addition to the effect brought about by the end mill according to any of Claims 1 to 4: an end cutting edge, a gash, and a helical flute connecting to one another are plurally provided in a circumferential direction. A gash angle that is an inclination of a fillet of a gash to a virtual plane perpendicular to the axis line is set to not less than 20° and not more than 65°. As a result, chips can be easily discharged from a plurality of the gashes through the helical flutes and increase in cutting resistance caused by biting of chips or the like can be easily suppressed.

With an end mill according to Claim 6, the following effect is brought about in addition to the effect brought about by the end mill according to any of Claims 1 to 5: By setting a helix angle of a helical flute to not less than 20° and not more than 50°, discharge of chips produced by an end cutting edge is facilitated and increase in cutting resistance caused by biting of chips or the like can be easily suppressed.

### BRIEF DESCRIPTION OF THE DRAWINGS

FIG. 1 is a side view of an end mill in an embodiment;
FIG. 2 is a bottom view of an end mill;
FIG. 3 is graphs indicating torque load exerted on end mills in a comparative example and a working example; and
FIG. 4 is graphs indicating thrust load exerted on end mills in a comparative example and a working example.

### MODE FOR CARRYING OUT THE INVENTION

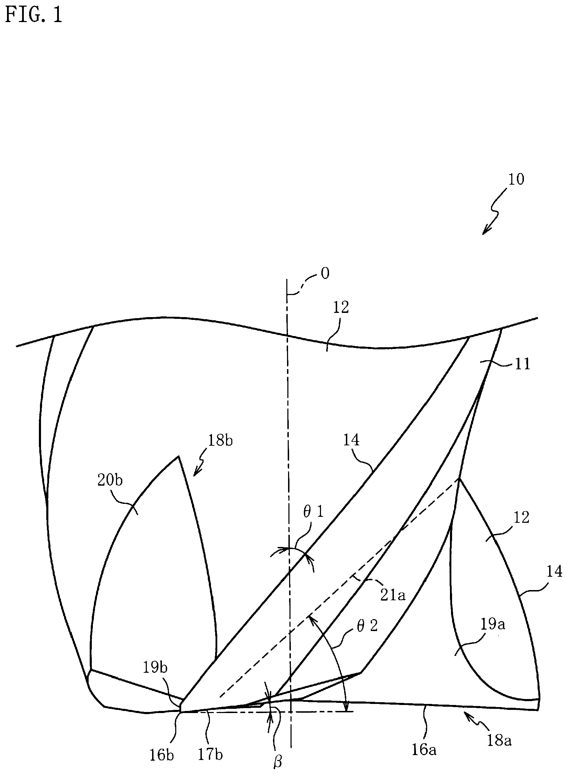

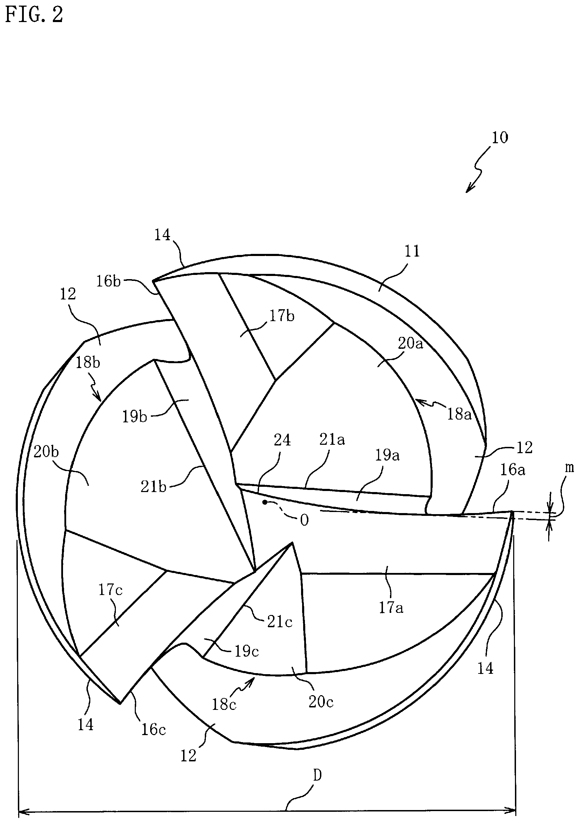

Hereafter, a description will be given to a preferable embodiment with reference to the accompanying drawings. FIG. 1 is a side view of an end mill 10 in an embodiment. FIG. 2 is a bottom view of the end mill 10. In FIG. 1, the tip (bottom face) side of the end mill 10 is shown in an enlarged manner.

The end mill 10 is a tool for cutting a workpiece (not shown) by turning force transmitted from a machining apparatus (not shown) and is configured as a square end mill of a solid type. The end mill 10 includes a tool body 11 formed of a cemented carbide obtained by pressure-sintering tungsten carbide or the like. The material of the tool body 11 is not limited to cemented carbide and may be high speed steel.

The tool body 11 is formed in a columnar shape with the axis line O thereof at the center and is provided on the base end side (upper side of the page of FIG. 1) with a shank (not shown). The end mill 10 is attached to the machining apparatus by holding this shank with a holder of the machining apparatus and the end mill 10 is rotated by the machining apparatus with the axis line O taken as a rotation axis.

On the tip side (lower side of the page of FIG. 1) of the tool body 11, a helical flute 12, a peripheral cutting edge 14, end cutting edges 16a to 16c, and gashes 18a to 18c are mainly formed. A cutting edge portion is formed in the tool body 11 by these parts and a workpiece is cut by the cutting edge portion.

The helical flute 12 is for holding and discharging chips during cutting. The helical flute 12 is recessed from the tip part toward the base end side of the tool body 11 in the rim of the tool body 11 in such a manner that the helical flute is (spirally) twisted around the axis line O. Three helical flutes 12 are symmetrically disposed with respect to the axis line O.

The peripheral cutting edge 14 is a region for cutting a workpiece. Three peripheral cutting edges 14 are formed in the rim of the tool body 11 respectively along circumferential edges (rear edges in the direction of rotation) of the three helical flutes 12 and are comprised of an ordinary tooth. The cutting face of each peripheral cutting edge 14 is formed of a helical flute 12.

When the end mill 10 is laterally viewed (viewed from a direction perpendicular to the axis line O), an angle of inclination of the helical flute 12 (peripheral cutting edge 14) to the axis line O is designated as helix angle Θ1. As this helix angle Θ1 is increased, a load applied to the peripheral cutting edge 14 during cutting is more reduced and thus, the durability of the peripheral cutting edge 14 can be enhanced. On the contrary, cutting resistance due to the peripheral cutting edge 14 is more increased.

When a helix angle Θ1 is not less than 20°, chips in a helical flute 12 can be easily sent out to the base end side along the inclination. As a result, chips can be made less prone to bite into between a workpiece and the end cutting edges 16a to 16c or the peripheral cutting edges 14 and thus increase in cutting resistance caused by this biting can be easily suppressed. When a helix angle Θ1 is not more than 50°, a length of the peripheral cutting edge 14 can be suppressed and increase in cutting resistance due to the peripheral cutting edge 14 can be easily suppressed during cutting.

Like the peripheral cutting edges 14, the end cutting edges 16a to 16c are a region for cutting a workpiece and are formed in the tip part of the tool body 11. The three end cutting edges 16a to 16c are so provided as to respectively connect to the three peripheral cutting edges 14.

Flanks 17a to 17c circumferentially extending from the end cutting edges 16a to 16c are formed in the apical surface of the tool body 11. As being away from the end cutting edges 16a to 16c, the flanks 17a to 17c ascend and incline so as to be away from a virtual plane perpendicular to the axis line O. As a clearance angle β that is an angle formed by this virtual plane and the flanks 17a to 17c is more increased, friction due to the end cutting edges 16a to 16c is more reduced during cutting. On the contrary, the strength of the end cutting edges 16a to 16c is degraded.

The gashes 18a to 18c are flutes for extending the end cutting edges 16a to 16c to the axis line O side and enhancing the capability to discharge chips produced at the end cutting edges 16a to 16c. Three gashes 18a to 18c are respectively recessed on the tip side of the three helical flutes 12 from the outer circumferential side toward the axis line O.

The gashes 18a to 18c are so formed that the gashes are made deeper as approaching the tip of the end mill 10. The gash 18a connects to the gash 18b at the tip of the end mill 10 and the gash 18b connects to the gash 18c at the tip of the end mill 10. The gash 18c is so formed that the gash 18c is shallower than the two other gashes 18a, 18b and does not connect to the gash 18a.

As a result, a center cutting edge 24 facing the axis line O is formed in the end cutting edge 16a facing the gash 18a. Owing to this center cutting edge 24, the end cutting edge 16a is longer than the radius (D/2) of the tool body 11 and even in the vicinity of the axis line O, a workpiece can be cut with the end cutting edge 16a (center cutting edge 24). That is, the center cutting edge 24 enables cutting (helical processing, lapping, thrust-in processing, and the like) in the axis line O direction with the end mill 10.

The gashes 18a to 18c form cutting faces 19a to 19c of the end cutting edges 16a to 16c and further form gash faces 20a to 20c opposed to the cutting faces 19a to 19c in the circumferential direction. The boundaries between the cutting faces 19a to 19c and the gash faces 20a to 20c are the fillets 21a to 21c of the gashes 18a to 18c. In the present embodiment, the fillets 21a to 21c are linearly formed but the fillets 21a to 21c may be formed in a shape of a wide band.

An inclination of the fillets 21a to 21c to a virtual plane perpendicular to the axis line O is designated as gash angle Θ2. As this gash angle Θ2 is more increased, the capacity of a chips holding space of the gashes 18a to 18c can be made larger. On the contrary, the thickness of the tip part of the tool body 11 is more reduced and the rigidity is degraded.

When a gash angle Θ2 is not less than 20°, the sufficient capacity of chip holding spaces of the gashes 18a to 18c can be ensured. As a result, chips can be made less prone to bite into between a workpiece and the end cutting edges 16a to 16c or the peripheral cutting edges 14 and increase in cutting resistance caused by this biting can be easily suppressed. When a gash angle Θ2 is not more than 65°, the sufficient rigidity of the tool body 11 can be ensured in the vicinity of the gashes 18a to 18c and, for example, increase in cutting resistance in conjunction with deformation or chipping of the tool body 11 can be easily suppressed.

The cutting faces 19a to 19c are formed of a recessed curved surface. More specifically, the cutting faces 19a to 19c are formed of flutes that extend in parallel with the fillets 21a to 21c inclined from the axis line O and are recessed at the center part in the radial direction. As a result, as compared with cases where the cutting faces 19a to 19c are a flat surface, a gash rake angle on the outer circumferential side of the end cutting edges 16a to 16c can be easily increased especially when the cutting faces 19a to 19c are a recessed curved surface. As a result, chips produced by the end cutting edges 16a to 16c can be easily thinned.

The gash rake angle refers to an angle of inclination of a part of the cutting faces 19a to 19c connecting to a point to a virtual plane embracing the axis line O and that point of the end cutting edges 16a to 16c. Unless specially specified, a gash rake angle refers to that at a point in the center of the end cutting edges 16a to 16c in the radial direction. When the cutting faces 19a to 19c are located on the rearward side in the cutting direction with respect to a virtual plane embracing the axis line O, a gash rake angle is taken as positive; and when the cutting faces 19a to 19c are located on the frontward side in the cutting direction, a gash rake angle is taken as negative.

When a gash rake angle is within a range of -20° to 20°, the durability of the end cutting edges 16a to 16c and required cutting force can be balanced. Consequently, increase in cutting resistance in conjunction with deformation or chipping of the end cutting edges 16a to 16c can be easily suppressed and increase in cutting resistance according to cutting force can be easily suppressed.

The gash faces 20a to 20c are formed of a flat surface. In a section perpendicular to the gash faces 20a to 20c, the gash faces 20a to 20c and the opposed cutting faces 19a to 19c are parallel to each other.

Since the cutting faces 19a to 19c are a recessed curved surface, the end cutting edges 16a to 16c formed of the ridges between the cutting faces 19a to 19c and the flanks 17a to 17c are also concavely curved. Specifically, the end cutting edges 16a to 16c are so curved that the center part thereof in the radial direction is circumferentially recessed as viewed in the axis line O direction.

As a result, when a workpiece is cut with the recessed end cutting edges 16a to 16c, chips can be spirally produced so that the chips are guided to the center side of the curved surface of the cutting faces 19a to 19c. For this reason, retention of chips in the gashes 18a to 18c can be suppressed and thus, chips can be easily discharged from the vicinity of the gashes 18a to 18c to outside the end mill 10.

As compared with cases where linear end cutting edges 16a to 16c are used, when recessed end cutting edges are used, an identical amount of a workpiece can be cut with longer end cutting edges 16a to 16c. Therefore, chips produced by the end cutting edges 16a to 16c can be easily thinned. As a result, chips can be easily separated by centrifugal force in conjunction with rotation of the end mill 10 and thus, twining of chips around the end mill 10 can be suppressed.

Especially, the end mill 10 having the center cutting edge 24 is capable of cutting in the axis line O direction and during cutting in the axis line O direction, discharge or twining of chips is prone to pose a problem. However, discharge of chips can be facilitated and twining of chips around the end mill 10 can be suppressed by the recessed end cutting edges 16a to 16c as mentioned above.

At the tip part of the end mill 10, the cutting faces 19a to 19c are provided up to the peripheral cutting edges 14. As a result, the recessed end cutting edges 16a to 16c arising from the cutting faces 19a to 19c are provided up to the outer circumferential end of the end mill 10 to form a gash land (not shown). Consequently, the strength of a cutting edge corner formed by the end cutting edges 16a to 16c and the peripheral cutting edges 14 can be enhanced and breakage of the end mill 10 can be suppressed.

The shortest distance from a tangential line at a most circumferentially recessed point in the end cutting edges 16a to 16c to the outermost end of the end cutting edges 16a to 16c as viewed in the axis line O direction is designated as recessed amount m. A recessed amount m preferably satisfies m≤0.05D, where D is the diameter of the tool body 11 (diameter of the peripheral cutting edges 14). When m>0.05D, the recessed amount m is too large relative to the diameter D of the tool body 11. As a result, the thickness of the tool body 11 cannot be ensured in the vicinity of the gashes 18a to 18c and the end mill 10 can be prone to breakage. By satisfying m≤0.05D, meanwhile, the rigidity of the end mill 10 can be ensured and breakage of the end mill 10 can be suppressed.

The following can be implemented by a combination of the cutting faces 19a to 19c having a recessed curved surface and the flanks 17a to 17c that ascend and incline as being away from the end cutting edges 16a to 16c: Even when the cutting faces 19a to 19c are viewed from the front, the center parts of the end cutting edges 16a to 16c in the radial direction are slightly recessed to the base end side (upward). A recessed amount of the end cutting edges 16a to 16c in the axis line O direction can be calculated by m×tanβ using the recessed amount m in the circumferential direction and the clearance angle β.

A recessed amount of the end cutting edges 16a to 16c in the axis line O direction and the flatness of the cutting surfaces of the end cutting edges 16a to 16c are substantially identical with each other. To finish the flatness of the cutting surface to 0.02 to 0.05 mm at a time during finishing after cutting with the end mill 10, it is desired to control the flatness to less than 0.15 mm immediately after cutting with the end mill 10. By satisfying m<0.15/tanβ, the flatness of cutting surfaces by the end cutting edges 16a to 16c can be easily controlled to less than 0.15 mm (a recessed amount in the axis line O direction can be easily controlled to less than 0.15 mm) and a number of times of subsequent finishing can be reduced. Working Example

Hereafter, a more specific description will be given to the present invention based on a working example. In the following working example, the end mill 10 described in relation to the above embodiment was used. The present invention is not limited to the following working example.

In the end mill in the working example, the material of the tool body 11 was cemented carbide; the diameter D of the tool body 11 was 6 mm; a helix angle Θ1 was 41°; a clearance angle β was 6°; a gash angle Θ2 was 45°; a recessed amount m was 0.15 mm; and a gash rake angle was 3°.

In the end mill in the working example, as mentioned above, the cutting faces 19a to 19c were a concavely curved surface and the end cutting edges 16a to 16c were recessed. In an end mill in a comparative example, meanwhile, a cutting face was a flat surface and an end cutting edge comprised of the ridge between the cutting face and a flank was linear. The other configuration elements of the comparative example are identical with those of the working example.

Using the end mills in the working example and the comparative example, a thrust-in processing test was conducted to evaluate twining of chips around the end mills. The conditions for the thrust-in processing test for twining evaluation were as follows: Workpiece: SCM440(30HRC), cutting speed: 80 m/min, rotational speed:4244 min⁻¹, feed speed: 127 mm/min, axial depth of cut: 3 mm, cooling method: dry, and dwell (end mill feed standby at the bottom of a machining hole): 0.5 sec.

During this thrust-in processing test, in the comparative example, it was confirmed that chips twine around the end mill and in some cases, the end mill was broken by twining of chips. In the working example, meanwhile, it was confirmed that chips did not twine around the end mill. Therefore, it was revealed that twining of chips around an end mill can be suppressed by providing the cutting faces 19a to 19c with a recessed curved surface and concavely curving the end cutting edges 16a to 16c.

Subsequently, using end mills in the working example and the comparative example, cutting resistance (load torque and thrust load) against the end mills was measured during a thrust-in processing test. The conditions for this thrust-in processing test were as follows: The workpiece: SUS304, cutting speed: 50 m/min, rotational speed: 2650 min⁻¹, feed speed: 60 mm/min, axial depth of cut: 3 mm, cooling method: wet (cutting oil), and dwell: 0.5 sec.

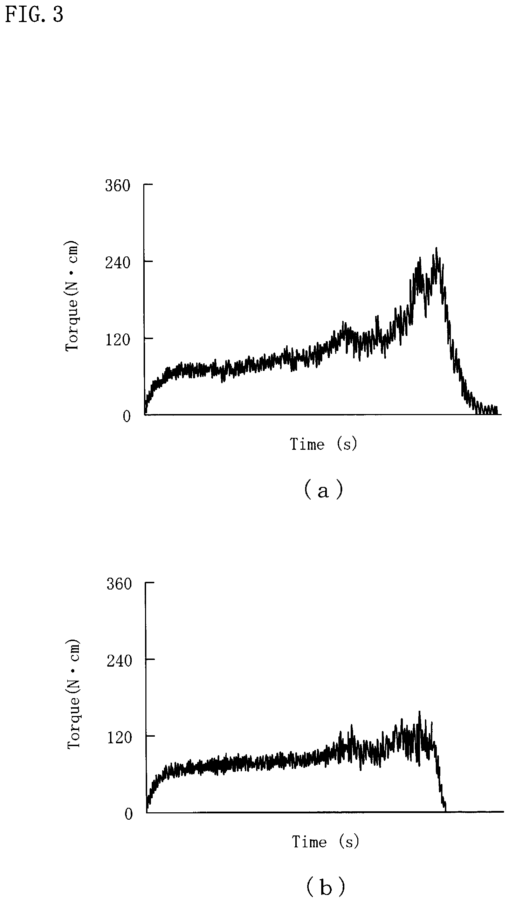

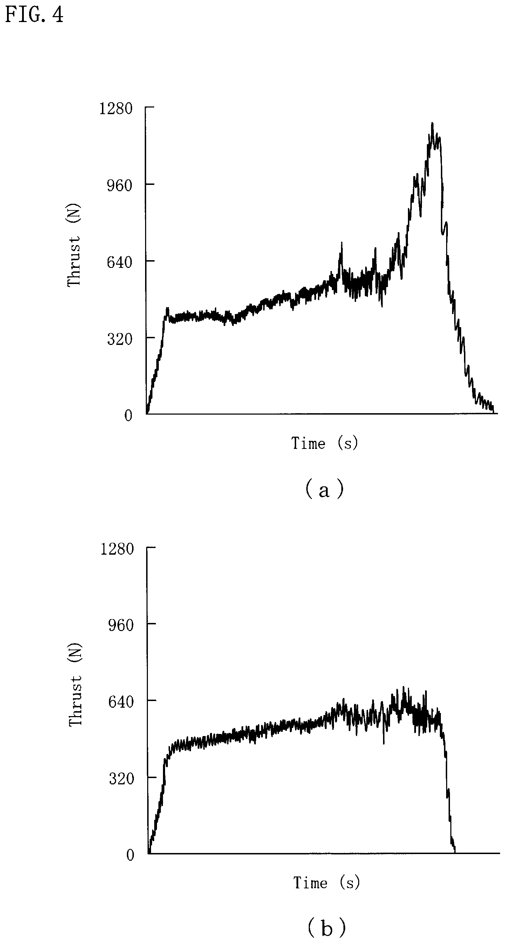

FIG. 3(a) is a graph of load torque-machining time in the comparative example and FIG. 3(b) is a graph of load torque-machining time in the working example. FIG. 4(a) is a graph of thrust load-machining time in the comparative example and FIG. 4(b) is a graph of thrust load-machining time in the working example.

In both the graphs, the horizontal axis is taken for machining time (Time) [s]. The left end of the horizontal axis is taken for machining start time and the right end is taken for machining end time. In FIG. 3(a) and FIG. 3(b), the vertical axis is taken for load torque (Torque) [N·cm]; and in FIG. 4(a) and FIG. 4(b), the vertical axis is taken for thrust load (Thrust) [N].

As indicated in FIG. 3(a) and FIG. 4(a), it was confirmed in the comparative example that load torque and thrust load are increased immediately before the end of thrust-in processing. It is inferred that chips produced in a liner end cutting edge was retained in a gash or a helical flute 12 and load torque and thrust load were increased by the chips biting into between a workpiece and an end cutting edge or a peripheral cutting edge 14.

As indicated in FIG. 3(b) and FIG. 4(b), meanwhile, in the working example in which the end cutting edges 16a to 16c are recessed, it was confirmed that load torque or thrust load was not increased immediately before the end of thrust-in processing and machining was performed with substantially constant load torque and thrust load. At this time, it was confirmed in the working example that chips were favorably discharged to outside the end mill as compared with the comparative example. As the result of the foregoing, it is inferred that by providing the cutting faces 19a to 19c with a recessed curved surface and concavely curving the end cutting edges 16a to 16c, discharge of chips to outside the end mill was facilitated and thus, cutting resistance was suppressed.

Subsequently, a helix angle Θ1, a gash angle Θ2, and a gash rake angle of the end mill in the working example were varied to prepare a plurality of samples and the cutting resistance of each sample during a thrust-in processing test was evaluated. The conditions for this thrust-in processing test were made identical with the above-mentioned conditions for measurement of cutting resistance in the above-mentioned working example and comparative example.

Table 1 shows the results of evaluation of cutting resistance in each sample of the end mill. As indicated in FIG. 3(b) and FIG. 4(b), the cutting resistance of each sample was evaluated as "O" when cutting resistance (load torque and thrust load) was substantially constant during machining with each sample. The discharging capability was evaluated as "Δ" when such increase in cutting resistance as indicated in FIG. 3(a) and FIG. 4(a) was observed in load torque and thrust load during machining with each sample. The discharging capability was evaluated as "x" when increase in cutting resistance was larger than indicated in FIG. 3(a) and FIG. 4(a) or when manufacture of a sample was structurally infeasible.

Aside from biting of retained chips, the causes of increase in cutting resistance during machining with each sample include deformation or chipping of the tool body 11, increase in area of cutting with the peripheral cutting edge 14, and the like. Therefore, even when increase in cutting resistance of a sample is observed, it cannot always be concluded that the chip discharging capability of the sample is degraded.

**[Table 1]**

| Gash angle θ2 | Gash rake angle | Helix angle θ1 | | | | |
|---|---|---|---|---|---|---|
| | | 15° | 20° | 35° | 50° | 55° |
| 10° | -20° | Δ | Δ | Δ | Δ | Δ |
| | 0° | Δ | Δ | Δ | Δ | Δ |
| | 20° | × | Δ | Δ | Δ | Δ |
| 20° | -30° | Δ | Δ | Δ | Δ | Δ |
| | -20° | Δ | ○ | ○ | ○ | Δ |
| | 0° | Δ | ○ | ○ | ○ | Δ |
| | 20° | × | ○ | ○ | ○ | Δ |
| | 30° | × | × | Δ | Δ | Δ |
| 45° | -30° | Δ | Δ | Δ | Δ | Δ |
| | -20° | Δ | ○ | ○ | ○ | Δ |
| | 0° | Δ | ○ | ○ | ○ | Δ |
| | 20° | × | ○ | ○ | ○ | Δ |
| | 30° | × | × | Δ | Δ | Δ |
| 65° | -30° | Δ | Δ | Δ | Δ | Δ |
| | -20° | Δ | ○ | ○ | ○ | Δ |
| | 0° | Δ | ○ | ○ | ○ | Δ |
| | 20° | × | ○ | ○ | ○ | Δ |
| | 30° | × | × | Δ | Δ | Δ |
| 70° | -20° | Δ | Δ | Δ | Δ | Δ |
| | 0° | Δ | Δ | Δ | Δ | Δ |
| | 20° | × | Δ | Δ | Δ | Δ |

As shown in Table 1, it was revealed that when a gash angle Θ2 is not less than 20° and not more than 65°, a gash rake angle is within a range of -20° to 20°, and a helix angle θ1 is not less than 20° and not more than 50°, the cutting resistance of a sample can be suppressed. It is inferred that cutting resistance could be suppressed because under these angular conditions, chips could be easily discharged to outside an end mill and any other cause of increase in cutting resistance did not exist.

Subsequently, a diameter D [mm] and a recessed amount m [mm] of an end mill in the working example were varied to prepare a plurality of samples. Further, a diameter D of an end mill in the comparative example was varied to prepare a plurality of comparative samples. A thrust-in processing test was conducted on each of these samples and comparative samples and the durability of each sample of end mill was evaluated. The conditions for this thrust-in processing test were made identical with the above-mentioned conditions for measurement of cutting resistance in the above-mentioned working example and comparative example.

Table 2 shows the durability of each sample of end mill. The durability of each sample was evaluated based on a number of machinable pieces, that is, a number of workpieces that could be machined until a comparative sample with an identical diameter was broken. The durability was evaluated as "Δ" when a number of machinable pieces of a sample was 0.9 to 1.1 times a number of machinable pieces of a comparative sample, that is, when these numbers of machinable pieces were substantially identical with each other. The durability was evaluated as "O" when a number of machinable pieces of a sample was larger than 1.1 times a number of machinable pieces of a comparative sample. The durability was evaluated as "×" when a number of machinable pieces of a sample is smaller than 0.9 times a number of machinable pieces of a comparative sample or when manufacture of a sample is structurally infeasible.

**[Table 2]**

| Diamete r | Recessed amount m(mm) | | | | | |
|---|---|---|---|---|---|---|
| | m=0.001 D | m=0.01 D | m=0.025 D | m=0.05 D | m=0.06 D | m=0.07 D |
| D (mm) | | | | | | |
| D=1 | ○ | ○ | ○ | ○ | ○ | × |
| D=3 | ○ | ○ | ○ | ○ | Δ | × |
| D=6 | ○ | ○ | ○ | ○ | ○ | × |
| D=10 | ○ | ○ | ○ | ○ | ○ | × |
| D=12 | ○ | ○ | ○ | ○ | Δ | × |
| D=16 | ○ | ○ | ○ | ○ | × | × |
| D=20 | ○ | ○ | ○ | ○ | × | × |

As shown in Table 2, it was confirmed that the durability (rigidity) of each sample in the working example can be enhanced as compared with the comparative samples having a linear end cutting edge by satisfying m≤0.05D regardless of the magnitude of a diameter D.

Up to this point, a description has been given based on the embodiment and the working example but the present invention is not limited to the above embodiment or the like at all. It is easily inferred that the present invention can be variously improved or modified without departing from the subject matter of the present invention. A number of the peripheral cutting edges 14, the end cutting edges 16a to 16c, or the like and a numerical value of a helix angle Θ1, a gash angle Θ2, or the like may be altered as appropriate.

In the description of the above embodiment, a case where the end mill 10 is configured as a square end mill has been taken as an example but the present invention is not limited to this. For example, the end mill 10 may be configured as a radius end mill. Further, the end mill 10 is not limited to of a solid type but may be of a throw-away type.

In the description of the above embodiment, a case where the peripheral cutting edge 14 is configured of an ordinary tooth has been taken as an example but the present invention is not limited to this. The peripheral cutting edge 14 may be configured of an interrupted cutting edge provided with a plurality of grooves or an undulated roughing formed cutting edge.

In the description of the above embodiment, a case where the end mill 10 has a gash land formed at a cutting edge corner has been taken as an example but the present invention is not limited to this. At the tip part of the end mill 10, the cutting faces 19a to 19c are not provided up to the peripheral cutting edges 14 and the cutting edge corner may be thereby formed as a sharp corner. The cutting edge corners may be provided with a minute R for chipping prevention.

### explanation of reference

10 end mill
11 tool body
12 helical flute
16a~16c end cutting edge
17a~17c flank
18a~18c gash
19a~19c cutting face
21a~21c fillet
24 center cutting edge
O axis line
D diameter
m recessed amount
β clearance angle
θ1 helix angle
θ2 gash angle

## Claims

1. An end mill comprising:
a tool body with a columnar shape rotated with an axis line thereof taken as a rotation axis;
a helical flute recessed in a rim of the tool body in such a manner that the helical flute is twisted around the axis line;
an end cutting edge formed at a tip part of the tool body;
a flank circumferentially extended from the end cutting edge; and
a gash that is recessed on the tip side of the helical flute from an outer circumferential side toward the axis line and forms a cutting face of the end cutting edge,
wherein the cutting face is formed as a recessed curved surface and the end cutting edge comprised of a ridge between the cutting face and the flank is concavely curved.

2. The end mill according to Claim 1,
wherein when a recessed amount that is the shortest distance from a tangential line at a most circumferentially recessed point in the end cutting edge to the outermost end of the end cutting edge as viewed in the axis line direction is taken as m, and
a diameter of the tool body is taken as D,
m≤0.05D is satisfied.

3. The end mill according to Claim 1 or 2,
wherein when a recessed amount that is the shortest distance from a tangential line at a most circumferentially recessed point in the end cutting edge to the outermost end of the end cutting edge as viewed in the axis line direction is taken as m, and
an angle formed by a virtual plane perpendicular to the axis line and the flank is taken as β,
m<0.15/tanβ is satisfied.

4. The end mill according to any of Claims 1 to 3,
wherein the end cutting edge includes a center cutting edge facing the axis line.

5. The end mill according to any of Claims 1 to 4,
wherein the end cutting edge, the gash, and the helical flute connecting to one another are plurally provided in a circumferential direction, and
wherein a gash angle that is an inclination of a fillet of the gash to a virtual plane perpendicular to the axis line is not less than 20° and not more than 65°.

6. The end mill according to any of Claims 1 to 5,
wherein a helix angle of the helical flute is not less than 20° and not more than 50°.
